# EUROPÄISCHE PATENTANMELDUNG

(11) **EP 4 343 067 A1**
(43) Veröffentlichungstag der Anmeldung: **27.03.2024**
(21) Anmeldenummer: 23189020.3
(22) Anmeldetag: 01.08.2023
(51) Int. Cl.: E02D 7/00, E02D 17/13, E02D 13/06, E02F 9/26, E21B 41/00, E21B 7/02, E21B 44/00

(54) **TIEFBAUMASCHINE UND VERFAHREN ZUM HERSTELLEN EINER GRÜNDUNG IM BODEN**

(30) Priorität: 23.09.2022 EP 22197380
(71) Anmelder: BAUER Maschinen GmbH, 86529 Schrobenhausen (DE)
(72) Erfinder: Brüderle, Peter, 85123 Karlskron (DE); Schober, Andreas, 86637 Wertingen (DE)
(74) Vertreter: Wunderlich & Heim Patentanwälte PartG mbB

(57) **Zusammenfassung**

Die Anmedung betrifft eine Tiefbaumaschine (10) zum Erstellen einer Gründung im Boden, welche ausgebildet ist, ein Loch im Boden bis zu einer vorgegebenen Zieltiefe zum Bilden mindestens eines Gründungselementes im Boden zu erzeugen oder mindestens ein Gründungselement unmittelbar in den Boden bis zu der vorgegebenen Zieltiefe einzubringen, mit einer Steuereinheit (40), in welche die Zieltiefe eingebbar ist, und einer Anzeigeeinrichtung (50), insbesondere einem Monitor, auf welchem Daten zum Betrieb der Tiefbaumaschine durch die Steuereinheit (40) anzeigbar sind, wobei die Steuereinheit (40) ausgebildet ist, basierend auf der eingegebenen Zieltiefe und abhängig von in der Steuereinheit (40) eingebbaren oder eingegebenen Parametern zur Herstellung der Gründung eine zu erwartende Zielerreichungszeit bis zum Erreichen der eingegebenen Zieltiefe zu berechnen und mit der Anzeigeeinrichtung (40) anzuzeigen.

## Beschreibung

Die Erfindung betrifft eine Tiefbaumaschine zum Erstellen einer Gründung im Boden, welche ausgebildet ist, ein Loch im Boden bis zu einer vorgegebenen Zieltiefe zum Bilden mindestens eines Gründungselementes im Boden zu erzeugen oder mindestens ein Gründungselement unmittelbar in den Boden bis zu einer vorgegebenen Zieltiefe einzubringen, mit einer Steuereinheit, in welche insbesondere die Zieltiefe eingebbar ist, und einer Anzeigeeinrichtung, insbesondere einem Monitor, auf welcher Daten zum Betrieb der Tiefbaumaschine durch die Steuereinrichtung anzeigbar sind, gemäß dem Oberbegriff des Anspruchs 1.

Die Erfindung betrifft weiterhin ein Verfahren zum Herstellen einer Gründung im Boden, bei dem ein Loch im Boden bis zu einer vorgegebenen Zieltiefe zum Bilden mindestens eines Gründungselementes im Boden erzeugt oder mindestens ein Gründungselement unmittelbar in den Boden bis zu der vorgegebenen Zieltiefe eingebracht wird, wobei insbesondere die Zieltiefe in eine Steuereinheit der Tiefbaumaschine eingegeben wird, und wobei durch die Steuereinheit Daten zum Betrieb der Tiefbaumaschine auf einer Anzeigeeinrichtung, insbesondere einem Monitor, der Tiefbaumaschine angezeigt werden, gemäß dem Oberbegriff des Anspruchs 12.

Tiefbaumaschinen und Verfahren zum Erstellen von Gründungen im Boden sind seit langem bekannt. Ein Gründungselement kann dabei beispielsweise durch Erstellen eines Loches im Boden, etwa eines Bohrloches oder eines Frässchlitzes, gebildet werden, wobei das Loch anschließend zum Bilden eines Gründungspfahles oder eines Schlitzwandsegmentes gegebenenfalls mit einer zusätzlichen Armierung mit einem aushärtbaren Medium, insbesondere einem Zement, verfüllt wird. Ein Gründungselement kann auch durch Einrammen oder Einrütteln, etwa eines Gründungspfahles oder einer Bohle erfolgen. Ein Gründungselement im Sinne der vorliegenden Erfindung ist dabei nicht auf eine Lastaufnahme oder eine Tragfähigkeitsfunktion beschränkt, sondern kann alternativ oder ergänzend auch eine Dichtfunktion und/oder andere Aufgaben übernehmen, wie es etwa bei Baugrubenumschließungen mit Dichtwänden aus dem Spezialtiefbau bekannt ist.

Bekannte Tiefbaumaschinen sind heutzutage mit elektronischen Steuereinheiten versehen, welche den Betrieb der Tiefbaumaschine für einen Maschinenbediener erleichtern oder sogar teil- oder vollautomatisch übernehmen können. Über Sensoren können verschiedene Betriebsdaten erfasst und der Steuereinheit zugeleitet werden. Über entsprechende Datenleitungen können Steuerbefehle an entsprechende Aktoren, insbesondere Antriebe und Stellzylinder, ausgegeben werden.

Derartige Tiefbaumaschinen sind beispielsweise aus der EP 3299523 A1, der EP 3296467 A1 bekannt.

Für einen effizienten Arbeitsablauf an einer Baustelle ist ein termingerechtes Erstellen einer Gründung von maßgeblicher Bedeutung, da eine Gründung am Anfang eines Bauvorhabens zu erstellen ist. Zeitliche Verzögerungen bei der Gründung können dazu führen, dass sich nachfolgende Gewerke zeitlich verschieben.

Der Erfindung liegt die **Aufgabe** zugrunde, eine Tiefbaumaschine und ein Verfahren anzugeben, mit welchen eine Gründung im Boden besonders effizient und planungsgemäß erstellt werden kann.

Die Aufgabe wird zum einen durch eine Tiefbaumaschine mit den Merkmalen des Anspruchs 1 und zum anderen durch ein Verfahren mit den Merkmalen des Anspruchs 12 gelöst. Bevorzugte Ausführungsformen der Erfindung sind in den abhängigen Ansprüchen angegeben.

Die erfindungsgemäße Tiefbaumaschine ist dadurch gekennzeichnet, dass eine Berechnungseinrichtung, insbesondere als Teil der Steuereinheit, vorgesehen und ausgebildet ist, basierend auf der eingegebenen Zieltiefe und abhängig von eingegebenen Parametern zur Herstellung der Gründung eine zu erwartende Zielerreichungszeit bis zum Erreichen der eingegebenen Zieltiefe zu berechnen und mit der Anzeigeeinrichtung anzuzeigen. Vorzugsweise sind die Parameter in der Steuereinheit eingebbar oder eingegeben.

Eine Grundidee der Erfindung liegt darin, einem Maschinenbediener und/oder einer anderen Person bzw. mehreren anderen Personen, etwa einem Polier oder einem Bauleiter, basierend auf der eingegebenen Zieltiefe des zu erstellenden Gründungselementes vorzugsweise durch die Steuereinheit die zu erwartende Zielerreichungszeit auf einer Anzeigeeinrichtung anzuzeigen. Die Zielerreichungszeit kann von der Berechnungseinrichtung, vorzugsweise der Steuereinheit, abhängig von hinterlegten Parametern berechnet werden. Im einfachsten Fall kann als Parameter eine durchschnittliche Vortriebsgeschwindigkeit für die eingesetzte Tiefbaumaschine und/oder das eingesetzte Werkzeug hinterlegt sein. Die berechnete Zielerreichungszeit kann einmalig zu Beginn oder mehrfach während der Bearbeitung berechnet und gegebenenfalls aktualisiert und konkretisiert werden. Die Zielerreichungszeit kann dabei die Zeit bis zum Erreichen der Zieltiefe sowie gegebenenfalls zusätzliche Zeitangaben zum Abschließen der Gründungsmaßnahme umfassen.

Die Angabe der Zielerreichungszeit erleichtert beispielsweise für einen Maschinenbediener den Betrieb der Tiefbaumaschine bzw. für andere Personen die Baustellenplanung. Sie erlaubt eine bessere Abschätzung, ob und gegebenenfalls wie viele Gründungselemente etwa bis zu einem Schichtende erstellt werden können. Auch erlaubt die Ermittlung einer Zielerreichungszeit die Abstimmung mit weiteren Betriebsmaßnahmen, wie etwa der Zulieferung von Bewehrungskörben, von aushärtbaren Medien, insbesondere Mörtel oder Zementsuspension, und/oder die Anlieferung weiterer Baumaterialien und/oder Gründungselemente für nachfolgende Arbeiten.

Eine besonders genaue Berechnung der zu erwartenden Zielerreichungszeit wird nach einer Weiterbildung der Erfindung dadurch erzielt, dass die Parameter Werte zu einem oder mehreren der folgenden Angaben umfassen: Bodenart, Bodenprofil, Bearbeitungsverfahren, Bearbeitungswerkzeug, Maschinentyp, Antriebsleistung, Drehzahl und/oder Drehmoment des Antriebs, Drehzahl des Bearbeitungswerkzeuges, Vorschubkraft und/oder Vorschub. Die entsprechenden Werte der Parameter können vorab von dem Maschinenbediener und/oder einer Zentrale eingegeben oder abgefragt oder von der Maschine selbst vor oder während des Betriebes erfasst und abgespeichert werden.

Die Angabe zur Bodenart kann insbesondere Angaben zur Festigkeit des Bodens und damit der zu erwartenden Vortriebsgeschwindigkeit umfassen. Bei einem eingegebenen Bodenprofil kann berücksichtigt werden, dass der Boden schichtweise aus unterschiedlich festen Bodenschichten aufgebaut sein kann. Bei dem Bearbeitungsverfahren kann ein grundsätzlicher Arbeitsablauf hinterlegt sein, beispielsweise ob ein kontinuierliches Bohren mit einer Endlosschnecke oder ein diskontinuierliches Bohren mit einem Bohreimer vorgesehen ist. Auch Daten zur Dimensionierung und/oder zum Zustand, insbesondere einem tatsächlichen oder zu erwartendem Verschleißzustand, des Bearbeitungswerkzeuges können einen Einfluss auf die Vortriebsgeschwindigkeit haben. Entsprechendes gilt für verschiedene Leistungsdaten der Maschine hinsichtlich der Drehzahl und/oder des Drehmoments des Antriebes, der Drehzahl des Bearbeitungswerkzeuges, der Vorschubkraft und/oder eines Vorschubs beziehungsweise einer Vorschubgeschwindigkeit. Bei der Bestimmung der Zielerreichungszeit können auch weitere Parameter berücksichtigt werden, welche einen Einfluss auf die Arbeitsgeschwindigkeit beim Erstellen des Gründungselementes haben können. Parameter können auch einen gemessenen oder errechneten Werkzeugverschleiß betreffen. So kann etwa berücksichtigt werden, wenn das Werkzeug oder der Werkzeugbesatz gewechselt werden muss, was auch in die Kalkulation der Zielerreichungszeit eingerechnet werden kann.

Nach einer vorteilhaften Ausführung der Erfindung ist es zweckmäßig, dass die Berechnungseinrichtung integriert in die Steuereinheit der Tiefbaumaschine oder getrennt hiervon angeordnet ist, wobei die Berechnungseinrichtung über eine Datenübertragungseinrichtung mit der Steuereinheit in Verbindung steht. Die Berechnungseinrichtung kann ein integraler Teil der Steuereinheit der Tiefbaumaschine sein. Die Berechnungseinrichtung kann aber auch teilweise oder insgesamt getrennt davon ausgebildet sein, etwa auf einem mobilen Computer, etwa einem Laptop oder einem Tablet-Computer, oder an einer entfernten Stelle, etwa einem Bauleiterbüro oder einer Zentrale, wobei eine Verbindung über eine vorzugsweise kabellose Datenverbindung oder über das Internet besteht.

Nach einer Weiterbildung der Erfindung ist es bevorzugt, dass die Steuereinheit bzw. die Berechnungseinheit ausgebildet ist, Parameter mittels einer oder mehrerer Sensoreinrichtungen automatisch zu erfassen und/oder aus einer maschineninternen und/oder externen Datenbank abzufragen. Insbesondere kann von der Steuereinheit eine Arbeitsgeschwindigkeit bis zum Erreichen einer ersten Tiefe erfasst und ermittelt werden, welche kleiner als die Zieltiefe ist. Anhand dieses ersten Bearbeitungsschrittes für eine erste Wegstrecke kann eine Hochrechnung bis zum Erreichen der Zieltiefe von der Steuereinheit durchgeführt werden.

An einer Baustelle kann auch bei einem vorausgehend erstellten Gründungselement eine Arbeitsgeschwindigkeit zur Berechnung der nachfolgenden Zielerreichungszeit herangezogen werden. Entsprechende Daten können dabei auch von einer Zentrale abgefragt werden, insbesondere wenn an größeren Baustellen mehrere gleiche oder gleichartige Tiefbaumaschinen zum Einsatz kommen. Es können auch Daten und Informationen zur Geologie des Bodens von der Maschine selbst erfasst oder von einer externen Datenbank abgefragt werden, in welcher etwa Daten von einem zu Baustellen üblicherweise erstellten Bodengutachten hinterlegt sind. Je mehr und je konkreter die erfassten oder hinterlegten Daten zu den Parametern sind, umso genauer kann die Zielerreichungszeit prognostiziert werden.

Grundsätzlich kann die Zielerreichungszeit einmalig zu Beginn der Bearbeitung ermittelt werden. Für eine besonders genaue Ermittlung der Zielerreichungszeit ist es nach einer Ausführungsform der Erfindung vorteilhaft, dass die Steuereinheit ausgebildet ist, die Parameter während der Herstellung der Gründung an sich verändernde Zustände anzupassen sowie die zu erwartende Zielerreichungszeit aktuell zu berechnen und mit der Anzeigeeinrichtung anzuzeigen. Die Zielerreichungszeit kann dabei kontinuierlich neu ermittelt werden. Bevorzugt erfolgt die Neuberechnung in vorgegebenen Zeitabständen, welche etwa im Sekundenbereich oder im Minutenbereich liegen können.

Besonders informativ etwa für eine Bedienperson ist es nach einer Weiterbildung der Erfindung, dass die zu erwartende Zielerreichungszeit durch Anzeige einer Zeitdauer und/oder einer Uhrzeit bei Zielerreichung angebbar ist. Dies ermöglicht insbesondere die Abstimmung mit weiteren Maßnahmen, welche im Verlauf der Herstellung des Gründungselementes oder bei Erreichen der Zieltiefe zu veranlassen und/oder vorzubereiten sind, oder die Einplanung notwendiger Arbeitspausen. Ergänzend kann zu einer Zeitangabe auch die Angabe der aktuellen Bearbeitungstiefe und/oder einer noch zu bearbeitenden Resttiefe bis zum Erreichen der Zieltiefe sinnvoll sein.

Eine weitere bevorzugte Ausführungsform der Erfindung besteht darin, dass eine Datenübertragungseinrichtung angeordnet ist, mit welcher Parameter von einer externen Datenbank oder einer Zentrale an die Steuereinheit und/oder von der Steuereinheit an die externe Datenbank oder die Zentrale übertragbar sind. Das Eingeben der Zieltiefe und/oder der Parameter kann grundsätzlich manuell von einem Maschinenbediener über eine Eingabeeinrichtung, etwa eine Tastatur, erfolgen. Eine Dateneingabe kann aber auch in jeder anderen geeigneten Weise erfolgen, etwa von einem Datenträger oder per Datenübertragung aus einer internen oder externen Datenspeicher kabelgebunden oder drahtlos. Die Datenübertragungseinrichtung kann dabei zur Datenübertragung entsprechend leitungsgebunden und/oder drahtlos betrieben werden.

Nach einer weiteren Ausführungsvariante der Erfindung ist es vorteilhaft, dass die Steuereinheit bzw. die Berechnungseinheit ausgebildet ist, abhängig von der zu erwartenden Zielerreichungszeit weitere Zeitangaben für durchzuführende oder empfohlene Maßnahmen an der Anzeigeeinrichtung anzuzeigen. So können durch die Steuereinheit Zeitpunkte oder Uhrzeiten angegeben werden, zu welchen beispielsweise eine weitere Materialbestellung, etwa von Mörtel oder Zementsuspension, von Bewehrungskörben und/oder weiteren Gründungspfählen oder Bohlen angezeigt werden. Insbesondere kann es bevorzugt sein, dass die Steuereinheit insbesondere über eine Zentrale die entsprechenden Maßnahmen automatisch und/oder nach Freigabe durch den Maschinenbediener auslöst. Hierdurch kann der Arbeitsablauf an der Baustelle noch effizienter gestaltet werden.

Die Zielerreichungszeit kann an eine entfernte Zentrale, insbesondere eine Bauleitung oder Baustellensteuerung, zur Überwachung und Steuerung des Bauablaufs übersandt werden.

Eine weitere Verbesserung des Betriebsablaufs kann nach einer Weiterentwicklung der Erfindung dadurch erzielt werden, dass die Steuereinheit ausgebildet ist, dass die an der Anzeigeeinrichtung angezeigten Maßnahmen unmittelbar durch den Maschinenbediener bestätigt und ausgelöst werden können. Die Anzeigeeinrichtung kann dabei insbesondere als ein Touchscreen oder ein Monitor mit einer Cursor- oder Maus-Steuerung ausgebildet sein, wobei die angezeigten Maßnahmen an der Anzeigeeinrichtung als aktive Steuerfelder ausgebildet sind. Diese können durch einfache Berührung bei einem Touchscreen oder durch Anklicken mit einem Cursor veranlasst oder ausgelöst werden.

Eine weitere bevorzugte Ausführungsform der Erfindung besteht darin, dass die Steuereinheit bzw. die Berechnungseinheit ausgebildet ist, bei Erreichen der Zieltiefe eine Ist-Zeit der Herstellung zu erfassen und mit der berechneten erwarteten Zielerreichungszeit zu vergleichen und ein Vergleichsergebnis beim Berechnen einer zu erwartenden Zielerreichungszeit bei dem Herstellen einer nachfolgenden Gründung zu berücksichtigen. Durch einen Vergleich zwischen der tatsächlich erreichten Ist-Zeit und der vorab berechneten Zielerreichungszeit als Sollzeit kann eine weitere Verbesserung der Genauigkeit zur Bestimmung der Zielerreichungszeit erreicht werden. Vorzugsweise kann durch ein entsprechendes Computerprogramm mit künstlicher Intelligenz auch eine Analyse der Ursachen für aufgetretene Abweichungen zwischen der Ist-Zeit und der Soll-Zeit ermittelt und so weiter bei nachfolgenden Bestimmungen von Zielerreichungszeiten berücksichtigt werden.

Grundsätzlich kann die Tiefbaumaschine in jeder bekannten Weise ausgebildet sein, welche zum Erstellen einer Gründung im Boden eingesetzt werden kann. Bevorzugt ist es nach einer Ausführungsform der Erfindung, dass die Tiefbaumaschine weiter aufweist: Ein mobiles Trägergerät, einen Mast oder einen Auslegerarm, welcher an dem Trägergerät angeordnet ist, und ein Tiefbauwerkzeug, welches zum Ausführen einer Tiefbaumaßnahme zum Herstellen der Gründung, insbesondere zum Erreichen der Zieltiefe, an dem Mast beziehungsweise dem Auslegerarm verstellbar angeordnet ist.

Das mobile Trägergerät kann insbesondere über ein Raupenfahrwerk oder ein Radfahrwerk verfügen. Der Mast, welcher im Betrieb insbesondere im Wesentlichen vertikal angeordnet sein kann, kann als ein einfacher Mast, ein Mäkler oder als ein Teleskopmäkler ausgebildet sein. Ein Auslegerarm kann insbesondere schwenkbar um eine horizontale Schwenkachse an dem Trägergerät angeordnet sein. Ein Trägergerät kann insbesondere einen drehbar um eine vertikale Drehachse auf einem Unterwagen gelagerten Oberwagen aufweisen. Als ein Tiefbauwerkzeug können insbesondere ein Bohrwerkzeug, ein Mischwerkzeug, ein Schlitzwandgreifer oder Fräsräder vorgesehen sein. Als Tiefbauwerkzeug kann grundsätzlich auch eine Bohle oder ein Pfahl vorgesehen sein, wenn diese unmittelbar in den Boden unter Verdrängung von Bodenmaterial einbringbar sind. Ein Pfahl kann insbesondere als ein Ramm- oder Rüttelpfahl mit einer entsprechenden Pfahlspitze ausgebildet sein. Das einzubringende Gründungselement kann auch als Pfahl- oder Stützrohr ausgebildet sein.

Die erfindungsgemäße Tiefbaumaschine kann vorzugsweise als ein Bohrgerät, eine Schlitzwandfräse, ein Greifbagger, eine Ramme oder ein Rüttler ausgebildet sein. Mit einem Bohrgerät und einer Schlitzwandfräse kann zunächst ein Loch im Boden erstellt werden, in welchem dann das Gründungselement angeordnet oder ausgebildet wird. Insbesondere kann ein durch Bohren, Greifern oder Fräsen, also vorzugsweise durch Abtragen gebildetes Loch im Boden mit einer aushärtbaren Suspension und gegebenenfalls mit einem oder mehreren Bewehrungselementen verfüllt werden, wobei die Suspension dann zum Bilden des Gründungselementes aushärtet. Die aushärtbare Suspension kann außerhalb des Lochs hergestellt und in dieses eingeleitet oder in situ in dem Loch mit abgetragenem und im Loch verbliebenen, oder anders ausgedrückt mit gelöstem Bodenmaterial als ein sogenannter Bodenmörtel erzeugt werden. Mittels einer Ramme oder eines Rüttlers kann ein bestehendes Gründungselement, insbesondere ein Pfahl oder Bohle, unmittelbar in den Boden insbesondere unter Bodenverdrängung zum Bilden des Gründungselementes eingetrieben werden.

Das erfindungsgemäße Verfahren ist dadurch gekennzeichnet, dass basierend auf einer eingegebenen Zieltiefe die Steuereinheit abhängig von in die Steuereinheit eingebbaren oder eingegebenen Parametern zum Herstellen der Gründung eine zu erwartende Zielerreichungszeit berechnet und mit der Anzeigeeinrichtung angezeigt wird.

Grundsätzlich kann jede geeignete Anzeigeeinrichtung zum Einsatz kommen. Besonders bevorzugt ist es nach einer Ausführung der Erfindung, dass die Anzeigeeinrichtung mindestens einen Monitor, eine Datenbrille, eine VR- oder AR-Brille, ein Tablet, ein Smartphone, ein Head-Up-Display und/oder ein In-Glass-Display umfasst.

Vorteilhaft ist es nach einer erfindungsgemäßen Weiterbildung, dass die Steuereinheit bzw. die Berechnungseinheit ausgebildet ist, die errechnete Zielerreichungszeit an eine Zentrale oder ein entferntes Gerät weiterzuleiten oder zu übertragen. Somit kann diese Information an jede beliebige Stelle gesandt werden, für welche diese Information nutzbringend ist.

Das erfindungsgemäße Verfahren kann insbesondere mit einer zuvor beschriebenen erfindungsgemäßen Tiefbaumaschine ausgeführt werden. Dabei können die zuvor beschriebenen Vorteile erzielt werden.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische Seitenansicht einer erfindungsgemäßen Tiefbaumaschine und
- Fig. 2: eine schematische Darstellung zur Steuereinheit mit Anzeigeeinrichtung.

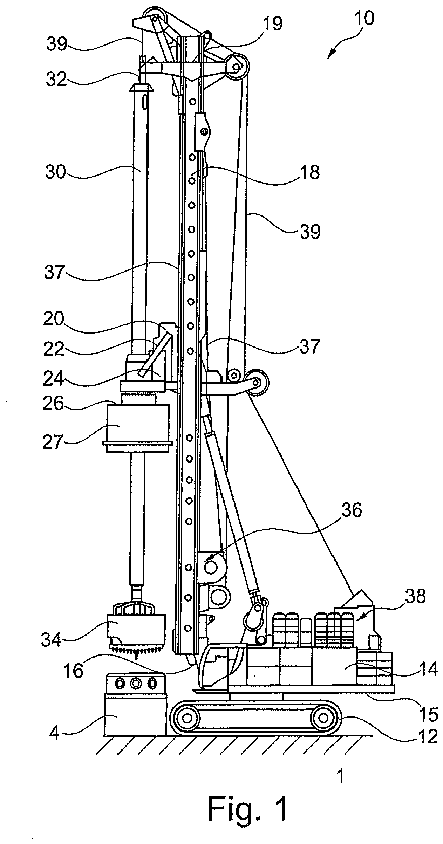

Eine erfindungsgemäße Tiefbaumaschine 10, welche beispielhaft als ein Bohrgerät gemäß Fig. 1 ausgebildet ist, weist einen vorzugsweise als Raupenfahrwerk ausgebildeten Unterwagen 12 und einen darauf drehbar gelagerten Oberwagen 14 auf. Der Unterwagen 12 und der Oberwagen 14 bilden ein Trägergerät 15. An dem Oberwagen 14 können in bekannter Weise die Antriebsaggregate und der Bedienstand für einen Maschinenbediener der Tiefbaumaschine 10 angeordnet sein. In dem Bedienstand können eine Steuereinheit und eine Anzeigeeinrichtung, insbesondere ein Monitor, angeordnet sein.

An einer Vorderseite des Oberwagens 14 kann über eine Anlenkkinematik 16 mit Nackenzylindern ein im wesentlichen vertikaler Mast 18 mit einem oberen Mastkopf 19 verstellbar angebracht sein. Entlang einer Vorderseite des Mastes 18 kann ein Schlitten 20 verschiebbar geführt werden. Auf dem Schlitten 20 kann ein erster Bohrantrieb 22 vorgesehen, welcher einen Hydraulikmotor 24 aufweisen kann. Weiterhin kann an dem Schlitten 20 ein zweiter Antrieb 26 mit einer hülsenförmigen Drehverbindung 27 zum Herstellen einer drehfesten Verbindung zu einem Stützrohr 4 vorgesehen sein. Der zweite Antrieb 26 kann beispielsweise im Wesentlichen aus einer Getriebeverbindung zu dem ersten Bohrantrieb 22 mit dem Hydraulikmotor 24 bestehen, um so ein Drehmoment auf die Drehverbindung 27 und damit das Stützrohr 4 aufzubringen.

Der etwa hülsenförmige erste Bohrantrieb 22 kann beispielhaft von einem Bohrgestänge 30 durchdrungen werden, welches als ein Kellygestänge mit äußeren Mitnehmerleisten ausgebildet sein kann. Hierbei kann das Bohrgestänge 30 eine obere Aufhängung 32 aufweisen, mit welcher das Bohrgestänge 30 mit einem Hauptseil 39 verbunden ist. Das Hauptseil 39 kann über Umlenkrollen am Mastkopf 19 zu einer Hauptwinde 38 an der Oberseite des Oberwagens 14 geführt sein. Durch Betätigen der Hauptwinde 38 kann das Bohrgestänge 30 vertikal bewegt werden.

Der Schlitten 20 kann mit einem Vorschubseil 37 verbunden sein, welches oberhalb und unterhalb des Schlittens 20 entlang des Mastes 18 geführt und von einer Vorschubwinde 36 betätigt werden kann. Durch die Vorschubwinde 36 kann der Schlitten 20 entlang einer Führung des Mastes 18 nach oben oder unten bewegt werden.

An einer Unterseite des Bohrgestänges 30 ist ein Bohrwerkzeug als Tiefbauwerkzeug 34 zum Abtragen von Bodenmaterial angebracht. Das Tiefbauwerkzeug 34 ist in dem dargestellten Ausführungsbeispiel nach Fig. 1 als ein Bohreimer ausgeführt. Der Durchmesser des Bohrwerkzeuges ist dabei so ausgebildet, dass dieses in den inneren Hohlraum des Stützrohres 4 eingeführt werden kann.

Mit der Tiefbaumaschine 10 kann eine verrohrte Bohrung im Boden 1 erstellt werden. Zum Bilden eines Gründungselementes im Boden 1 kann in die Bohrung eine aushärtbare Masse eingeleitet werden, welche dann zum Gründungselement aushärtet. Das Stützrohr 4 kann in der Bohrung als Teil des Gründungselementes verbleiben oder vorzugsweise vor einem Aushärten aus dem Boden 1 gezogen werden.

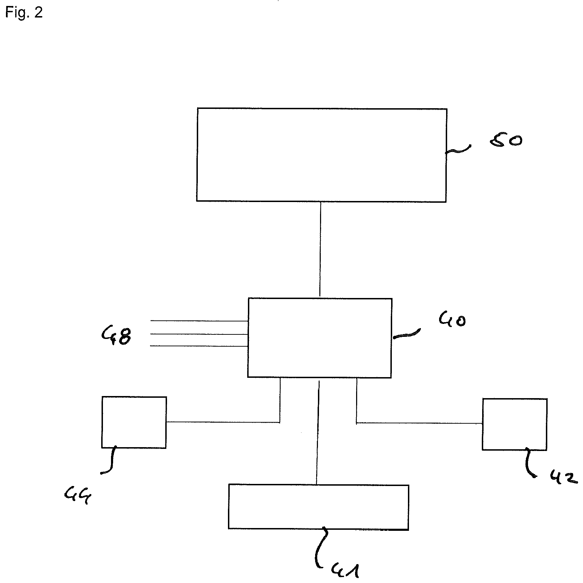

Gemäß Figur 2 ist die Anordnung einer Steuereinheit 40 für eine erfindungsgemäße Tiefbaumaschine 10 gezeigt, wobei die Steuereinheit 40 mit einer Anzeigeeinrichtung 50 leitungsverbunden oder drahtlos verbunden ist. Die Anzeigeeinrichtung 50 kann insbesondere als ein Monitor ausgebildet sein, mit welchem in den Bedienstand der Tiefbaumaschine 10 Daten zum Betrieb der Tiefbaumaschine 10 angezeigt werden können.

Über eine Eingabeeinrichtung 41, welche lediglich beispielhaft als eine Tastatur ausgebildet sein kann, kann bei der Erstellung einer Gründung im Boden 1 eine Zieltiefe in die Steuereinheit 40 eingegeben werden. Basierend auf der eingegebenen Zieltiefe und abhängig von Parametern zur Herstellung der Gründung kann durch die Steuereinheit 40 eine Zielerreichungszeit bis zum Erreichen einer eingegebenen Zieltiefe berechnet und an der Anzeigeeinrichtung 50 einem Maschinenbediener angezeigt werden. Dabei kann die Steuereinheit 40 zum Ermitteln der Zielerreichungszeit Parameter berücksichtigen, welche über verschiedene Wege und/oder Quellen in die Steuereinheit 40 eingebbar sind.

Die Parameter können über die Eingabeeinrichtung 41, aus einem maschineninternen Datenspeicher 42, aus einem maschinenexternen Datenspeicher 44, einer Zentrale und/oder unmittelbar von verschiedenen Sensoreinrichtungen 48 an der Tiefbaumaschine 10 der Steuereinheit 40 zur Berechnung der Zielerreichungszeit zugeleitet werden. Die Zielerreichungszeit kann einem Maschinenbediener über die Anzeigeeinrichtung 50 angezeigt werden, so dass der Maschinenbediener diese Information für einen effizienten Betrieb der Tiefbaumaschine 10 nutzen kann.

## Patentansprüche

**1.** Tiefbaumaschine zum Erstellen einer Gründung im Boden (1), welche ausgebildet ist, ein Loch im Boden bis zu einer vorgegebenen Zieltiefe zum Bilden mindestens eines Gründungselementes im Boden (1) zu erzeugen oder mindestens ein Gründungselement unmittelbar in den Boden (1) bis zu der vorgegebenen Zieltiefe einzubringen, mit
- einer Steuereinheit (40) und
- einer Anzeigeeinrichtung (50), insbesondere einem Monitor, auf welchem Daten zum Betrieb der Tiefbaumaschine (10) durch die Steuereinheit (40) anzeigbar sind,
**dadurch gekennzeichnet,**
- **dass** eine Berechnungseinrichtung vorgesehen und ausgebildet ist, basierend auf der eingegebenen Zieltiefe und abhängig von eingegebenen Parametern zur Herstellung der Gründung eine zu erwartende Zielerreichungszeit bis zum Erreichen der eingegebenen Zieltiefe zu berechnen und mit der Anzeigeeinrichtung (50) anzuzeigen.

**2.** Tiefbaumaschine nach Anspruch 1,
**dadurch gekennzeichnet,**
**dass** die Parameter Werte zu einem oder mehreren der folgenden Angaben umfassen:
Bodenart, Bodenprofil, Bearbeitungsverfahren, Tiefbauwerkzeug (34), Maschinentyp, Antriebsleistung, Drehzahl des Antriebes (22, 26), Drehzahl des Tiefbauwerkzeuges (34), Vorschubkraft und/oder Vorschub.

**3.** Tiefbaumaschine nach Anspruch 1 oder 2,
**dadurch gekennzeichnet,**
**dass** die Berechnungseinrichtung integriert in die Steuereinheit (40) der Tiefbaumaschine (10) oder getrennt hiervon angeordnet ist, wobei die Berechnungseinrichtung über eine Datenübertragungseinrichtung mit der Steuereinheit (40) in Verbindung steht.

**4.** Tiefbaumaschine nach einem der Ansprüche 1 bis 3,
**dadurch gekennzeichnet,**
**dass** die Steuereinheit (40) bzw. die Berechnungseinrichtung ausgebildet ist, Parameter mittels einer oder mehrerer Sensoreinrichtungen (48) automatisch zu erfassen und/oder aus einem maschineninternen und/oder externen Datenspeicher (42, 44) abzufragen.

**4.** Tiefbaumaschine nach einem der Ansprüche 1 bis 3,
**dadurch gekennzeichnet,**
**dass** die Steuereinheit (40) bzw. die Berechnungseinrichtung ausgebildet ist, die Parameter während des Herstellens der Gründung an sich verändernde Zustände anzupassen sowie die zu erwartende Zielerreichungszeit aktuell zu berechnen und mit der Anzeigeeinrichtung (50) anzuzeigen.

**5.** Tiefbaumaschine nach einem der Ansprüche 1 bis 4,
**dadurch gekennzeichnet,**
**dass** die zu erwartende Zielerreichungszeit durch Anzeige einer Zeitdauer und/oder einer Uhrzeit bei Zielerreichung angebbar ist.

**6.** Tiefbaumaschine nach einem der Ansprüche 1 bis 5,
**dadurch gekennzeichnet,**
**dass** eine Datenübertragungseinrichtung angeordnet ist, mit welcher Parameter von einem externen Datenspeicher (44) oder einer Zentrale an die Steuereinheit (40) und/oder von der Steuereinheit (40) an den externen Datenspeicher (44) oder die Zentrale übertragbar sind.

**7.** Tiefbaumaschine nach einem der Ansprüche 1 bis 6,
**dadurch gekennzeichnet,**
**dass** die Steuereinheit (40) bzw. die Berechnungseinrichtung ausgebildet ist, abhängig von der zu erwartenden Zielerreichungszeit weitere Zeitangaben für durchzuführende oder empfohlene Maßnahmen an der Anzeigeeinrichtung (50) anzuzeigen.

**8.** Tiefbaumaschine nach Anspruch 7,
**dadurch gekennzeichnet,**
**dass** die Steuereinheit (40) bzw. die Berechnungseinrichtung ausgebildet ist, dass die an der Anzeigeeinrichtung (50) angezeigten Maßnahmen unmittelbar durch eine Bedienperson bestätigt und ausgelöst werden können.

**9.** Tiefbaumaschine nach einem der Ansprüche 1 bis 8,
**dadurch gekennzeichnet,**
**dass** die Steuereinheit (40) bzw. die Berechnungseinrichtung ausgebildet ist, bei Erreichen der Zieltiefe eine Ist-Zeit der Herstellung zu erfassen und mit der berechneten erwarteten Zielerreichungszeit zu vergleichen und ein Vergleichsergebnis beim Berechnen einer zu erwartenden Zielerreichungszeit bei dem Herstellen einer nachfolgenden Gründung zu berücksichtigen.

**10.** Tiefbaumaschine nach einem der Ansprüche 1 bis 9,
**dadurch gekennzeichnet,**
**dass** die Tiefbaumaschine (10) weiter aufweist:
- ein mobiles Trägergerät (15),
- einen Mast (18) oder einen Auslegerarm, welcher an dem Trägergerät (15) angeordnet ist, und
- ein Tiefbauwerkzeug (34), welches zum Ausführen einer Tiefbaumaßnahme zum Herstellen der Gründung, insbesondere zum Erreichen der Zieltiefe, an dem Mast (18) beziehungsweise dem Auslegerarm verstellbar angeordnet ist.

**11.** Tiefbaumaschine nach einem der Ansprüche 1 bis 10,
**dadurch gekennzeichnet,**
**dass** die Tiefbaumaschine (10) als ein Bohrgerät, eine Schlitzwandfräse, ein Greifbagger, eine Ramme oder ein Rüttler ausgebildet ist.

**12.** Tiefbaumaschine nach einem der Ansprüche 1 bis 11,
**dadurch gekennzeichnet,**
**dass** die Anzeigeeinrichtung (50) mindestens einen Monitor, eine Datenbrille, eine VR- oder AR-Brille, ein Tablet, ein Smartphone, ein Head-Up-Display und/oder ein In-Glass-Display umfasst.

**13.** Tiefbaumaschine nach einem der Ansprüche 1 bis 12,
**dadurch gekennzeichnet,**
**dass** die Steuereinheit (40) bzw. die Berechnungseinrichtung ausgebildet ist, die errechnete Zielerreichungszeit an eine Zentrale oder ein entferntes Gerät weiterzuleiten oder zu übertragen.

**14.** Verfahren zum Herstellen einer Gründung im Boden (1), insbesondere mit einer Tiefbaumaschine (10) nach einem der Ansprüche 1 bis 13, bei dem ein Loch im Boden (1) bis zu einer vorgegebenen Zieltiefe zum Bilden mindestens eines Gründungselementes im Boden (1) erzeugt oder mindestens ein Gründungselement unmittelbar in den Boden (1) bis zu der vorgegebenen Zieltiefe eingebracht wird,
und
durch eine Steuereinheit (40) Daten zum Betrieb der Tiefbaumaschine (10) auf einer Anzeigeeinrichtung (50), insbesondere einem Monitor, der Tiefbaumaschine (10) angezeigt werden,
**dadurch gekennzeichnet,**
**dass** basierend auf der vorgegebenen Zieltiefe durch eine Berechnungseinrichtung abhängig von eingegebenen Parametern zum Herstellen der Gründung eine zu erwartende Zielerreichungszeit berechnet und mit der Anzeigeeinrichtung (50) einem Maschinenbediener angezeigt wird.

## Geänderte Patentansprüche

### Geänderte Patentansprüche gemäss Regel 137(2) EPÜ.

1. Tiefbaumaschine zum Erstellen einer Gründung im Boden (1), welche ausgebildet ist, ein Loch im Boden bis zu einer vorgegebenen Zieltiefe zum Bilden mindestens eines Gründungselementes im Boden (1) zu erzeugen oder mindestens ein Gründungselement unmittelbar in den Boden (1) bis zu der vorgegebenen Zieltiefe einzubringen, mit
- einer Steuereinheit (40) und
- einer Anzeigeeinrichtung (50), insbesondere einem Monitor, auf welchem Daten zum Betrieb der Tiefbaumaschine (10) durch die Steuereinheit (40) anzeigbar sind,
**dadurch gekennzeichnet,**
- **dass** eine Berechnungseinrichtung vorgesehen und ausgebildet ist, basierend auf der eingegebenen Zieltiefe und abhängig von eingegebenen Parametern zur Herstellung der Gründung eine zu erwartende Zielerreichungszeit bis zum Erreichen der eingegebenen Zieltiefe zu berechnen und mit der Anzeigeeinrichtung (50) anzuzeigen.

2. Tiefbaumaschine nach Anspruch 1,
**dadurch gekennzeichnet,**
**dass** die Parameter Werte zu einem oder mehreren der folgenden Angaben umfassen:
Bodenart, Bodenprofil, Bearbeitungsverfahren, Tiefbauwerkzeug (34), Maschinentyp, Antriebsleistung, Drehzahl des Antriebes (22, 26), Drehzahl des Tiefbauwerkzeuges (34), Vorschubkraft und/oder Vorschub.

3. Tiefbaumaschine nach Anspruch 1 oder 2,
**dadurch gekennzeichnet,**
**dass** die Berechnungseinrichtung integriert in die Steuereinheit (40) der Tiefbaumaschine (10) oder getrennt hiervon angeordnet ist, wobei die Berechnungseinrichtung über eine Datenübertragungseinrichtung mit der Steuereinheit (40) in Verbindung steht.

4. Tiefbaumaschine nach einem der Ansprüche 1 bis 3,
**dadurch gekennzeichnet,**
**dass** die Steuereinheit (40) bzw. die Berechnungseinrichtung ausgebildet ist, Parameter mittels einer oder mehrerer Sensoreinrichtungen (48) automatisch zu erfassen und/oder aus einem maschineninternen und/oder externen Datenspeicher (42, 44) abzufragen.

5. Tiefbaumaschine nach einem der Ansprüche 1 bis 4,
**dadurch gekennzeichnet,**
**dass** die Steuereinheit (40) bzw. die Berechnungseinrichtung ausgebildet ist, die Parameter während des Herstellens der Gründung an sich verändernde Zustände anzupassen sowie die zu erwartende Zielerreichungszeit aktuell zu berechnen und mit der Anzeigeeinrichtung (50) anzuzeigen.

6. Tiefbaumaschine nach einem der Ansprüche 1 bis 5,
**dadurch gekennzeichnet,**
**dass** die zu erwartende Zielerreichungszeit durch Anzeige einer Zeitdauer und/oder einer Uhrzeit bei Zielerreichung angebbar ist.

7. Tiefbaumaschine nach einem der Ansprüche 1 bis 6,
**dadurch gekennzeichnet,**
**dass** eine Datenübertragungseinrichtung angeordnet ist, mit welcher Parameter von einem externen Datenspeicher (44) oder einer Zentrale an die Steuereinheit (40) und/oder von der Steuereinheit (40) an den externen Datenspeicher (44) oder die Zentrale übertragbar sind.

8. Tiefbaumaschine nach einem der Ansprüche 1 bis 7,
**dadurch gekennzeichnet,**
**dass** die Steuereinheit (40) bzw. die Berechnungseinrichtung ausgebildet ist, abhängig von der zu erwartenden Zielerreichungszeit weitere Zeitangaben für durchzuführende oder empfohlene Maßnahmen an der Anzeigeeinrichtung (50) anzuzeigen.

9. Tiefbaumaschine nach Anspruch 8,
**dadurch gekennzeichnet,**
**dass** die Steuereinheit (40) bzw. die Berechnungseinrichtung ausgebildet ist, dass die an der Anzeigeeinrichtung (50) angezeigten Maßnahmen unmittelbar durch eine Bedienperson bestätigt und ausgelöst werden können.

10. Tiefbaumaschine nach einem der Ansprüche 1 bis 9,
**dadurch gekennzeichnet,**
**dass** die Steuereinheit (40) bzw. die Berechnungseinrichtung ausgebildet ist, bei Erreichen der Zieltiefe eine Ist-Zeit der Herstellung zu erfassen und mit der berechneten erwarteten Zielerreichungszeit zu vergleichen und ein Vergleichsergebnis beim Berechnen einer zu erwartenden Zielerreichungszeit bei dem Herstellen einer nachfolgenden Gründung zu berücksichtigen.

11. Tiefbaumaschine nach einem der Ansprüche 1 bis 10,
**dadurch gekennzeichnet,**
**dass** die Tiefbaumaschine (10) weiter aufweist:
- ein mobiles Trägergerät (15),
- einen Mast (18) oder einen Auslegerarm, welcher an dem Trägergerät (15) angeordnet ist, und
- ein Tiefbauwerkzeug (34), welches zum Ausführen einer Tiefbaumaßnahme zum Herstellen der Gründung, insbesondere zum Erreichen der Zieltiefe, an dem Mast (18) beziehungsweise dem Auslegerarm verstellbar angeordnet ist.

12. Tiefbaumaschine nach einem der Ansprüche 1 bis 11,
**dadurch gekennzeichnet,**
**dass** die Tiefbaumaschine (10) als ein Bohrgerät, eine Schlitzwandfräse, ein Greifbagger, eine Ramme oder ein Rüttler ausgebildet ist.

13. Tiefbaumaschine nach einem der Ansprüche 1 bis 12,
**dadurch gekennzeichnet,**
**dass** die Anzeigeeinrichtung (50) mindestens einen Monitor, eine Datenbrille, eine VR- oder AR-Brille, ein Tablet, ein Smartphone, ein Head-Up-Display und/oder ein In-Glass-Display umfasst.

14. Tiefbaumaschine nach einem der Ansprüche 1 bis 13,
**dadurch gekennzeichnet,**
**dass** die Steuereinheit (40) bzw. die Berechnungseinrichtung ausgebildet ist, die errechnete Zielerreichungszeit an eine Zentrale oder ein entferntes Gerät weiterzuleiten oder zu übertragen.

15. Verfahren zum Herstellen einer Gründung im Boden (1), insbesondere mit einer Tiefbaumaschine (10) nach einem der Ansprüche 1 bis 14, bei dem ein Loch im Boden (1) bis zu einer vorgegebenen Zieltiefe zum Bilden mindestens eines Gründungselementes im Boden (1) erzeugt oder mindestens ein Gründungselement unmittelbar in den Boden (1) bis zu der vorgegebenen Zieltiefe eingebracht wird,
und
durch eine Steuereinheit (40) Daten zum Betrieb der Tiefbaumaschine (10) auf einer Anzeigeeinrichtung (50), insbesondere einem Monitor, der Tiefbaumaschine (10) angezeigt werden,
**dadurch gekennzeichnet,**
**dass** basierend auf der vorgegebenen Zieltiefe durch eine Berechnungseinrichtung abhängig von eingegebenen Parametern zum Herstellen der Gründung eine zu erwartende Zielerreichungszeit berechnet und mit der Anzeigeeinrichtung (50) einem Maschinenbediener angezeigt wird.
